# EUROPÄISCHE PATENTSCHRIFT

(11) **EP 1 060 920 B1**
(45) Veröffentlichungstag und Bekanntmachung des Hinweises auf die Patenterteilung: **27.12.2006**
(21) Anmeldenummer: 00112519.4
(22) Anmeldetag: 13.06.2000
(51) Int. Cl.: B60J 7/02

(54) **Führungsschiene**
Guide-rail
Guide-rail

(30) Priorität: 15.06.1999 DE 19927234
(43) Veröffentlichungstag der Anmeldung: 20.12.2000
(73) Patentinhaber: Webasto Vehicle Systems International GmbH, 82131 Stockdorf (DE)
(72) Erfinder: Reinsch, Burkhard, 87600 Kaufbeuren (DE)
(74) Vertreter: Wiese, Gerhard

(56) Entgegenhaltungen:
- DE-A- 3 930 343
- DE-A- 4 326 291
- DE-A- 19 616 971
- FR-A- 2 797 818

## Beschreibung

Die Erfindung bezieht sich auf eine Führungsschiene zur verschiebbaren Aufnahme wenigstens eines öffnungsfähigen Dachteils eines Fahrzeugs, wobei die Führungsschiene wenigstens einen ersten und einen zweiten über eine Trennstelle miteinander verbindbaren Führungsschienenabschnitt umfasst, der erste und der zweite Führungsschienenabschnitt an der Trennstelle in Fluchtung bringbar sind und das öffnungsfähige Dachteil über die Trennstelle hinweg verschiebbar ist.

Aus der DE 42 03 229 C2 und der DE 43 26 291 C2 ist eine

Führungsschiene bekannt, bei der erste Führungsschienenabschnitte in Seitenholmen angeordnet sind, in denen das öffnungsfähige Dachteil in Fahrzeuglängsrichtung in beliebige Öffnungspositionen verfahrbar ist, wobei die Seitenholme an einem hinteren Dachteil schwenkbar angelenkt, mit einem oberhalb der Windschutzscheibe verlaufenden vorderen Querträger lösbar verbunden und nach Entriegelung von dem vorderen Querträger an das hintere Dachteil anschwenkbar sind. In dem hinteren Dachteil sind zweite Führungsschienenabschnitte vorgesehen, die das öffnungsfähige Dachteil in Öffnungsstellung lagern. Das komplette Fahrzeugdach inklusive einer mit dem hinteren Dachteil verbundenen Heckscheibe ist zur Freigabe einer cabrioartigen Dachöffnung in einen Stauraum im hinteren Teil des Fahrzeugs mittels einer Mechanik absenkbar, die mehrere Antriebe umfasst. Im vorderen Querträger ist ein elektrischer Antrieb angeordnet, der die Entriegelung der Seitenholme von dem Querträger bewirkt, ein zweiter elektrischer Antrieb im hinteren Dachteil übernimmt die Verschiebung des öffnungsfähigen Dachteils und ein weiterer, ebenfalls im Bereich des hinteren Dachteils angebrachter elektrischer Antrieb dient der Verschwenkung der Seitenholme. Ferner ist ein Hydraulikzylinder im Bereich der hinteren Fahrzeugseitenwände vorhanden, der für eine Verschwenkung des hinteren Dachteils zusammen mit dem vom hinteren Dachteil aufgenommenen öffnungsfähigen Dachteil, der an das hintere Dachteil angeschwenkten Seitenholme sowie hinterer Säulen (C-Säulen), auf denen das hintere Dachteil beidseitig ruht, sorgt.

Ein prinzipielles Problem bei geteilten Führungsschienen ist darin zu sehen, die zwei oder mehr Führungsschienenabschnitte an den Trennstellen in Fluchtung zu bringen und dabei funktionstaugliche Toleranzen einzustellen. Üblicherweise erfolgt dies dadurch, dass die Führungsschienenabschnitte über lösbare mechanische Verbindungsglieder, beispielsweise mittels Schrauben, an den sie aufnehmenden oder lagernden Dachteilen angebracht werden, wozu zeit- und damit kostenaufwendige Einstellarbeiten notwendig werden. Dabei muss die Zugänglichkeit der Schraubstellen gewährleistet sein, was in der Regel zusätzliche Abdeckteile erforderlich macht, wodurch nicht nur Einschränkungen im optischen Erscheinungsbild sondern auch weitere Teile- und Montagekosten entstehen.

DE 39 30 343A offenbart eine Führungschiene gemäß dem Oberbegriff des Anspruchs 1.

Der im Anspruch 1 angegebenen Erfindung liegt die Aufgabe zugrunde, eine Führungsschiene der eingangs genannten Art zu schaffen, bei der die Führungsschienenabschnitte ohne aufwendige Einstellarbeiten in Fluchtung gebracht werden können, wobei die Führungsschiene universell einsetzbar ist.

Diese Aufgabe wird bei einer Führungsschiene mit den Merkmalen des Oberbegriffs des Anspruchs 1 dadurch gelöst, dass der erste Führungsschienenabschnitt ein Zentrierorgan umfasst oder ein solches an ihm festgelegt ist, welches mit einem komplementären Gegenorgan zusammenwirkt, das an dem zweiten Führungsschienenabschnitt ausgebildet oder an diesem festgelegt ist, wobei der erste und/oder der zweite Führungsschienenabschnitt wenigstens im Bereich der Trennstelle nachgiebig an einem Dachteil des Fahrzeugs gelagert ist. Vorteilhafte Weiterbildungen der Erfindung sind Gegenstand der Unteransprüche.

Indem beim Zusammenführen der Führungsschienenabschnitte das Zentrierorgan mit dem Gegenorgan zusammenwirkt, können über die wenigstens im Bereich der Trennstelle nachgiebig gestaltete Lagerung des ersten und/oder des zweiten Führungsschienenabschnitts an dem Dachteil die Führungsschienenabschnitte in Fluchtung gebracht und Teiletoleranzen, insbesondere Toleranzen des den Führungsschienenabschnitt lagernden Dachteils, ausgeglichen werden. Bei zusammengeführten Führungsschienenabschnitten werden die Toleranzen an der Trennstelle im Wesentlichen nur von dem Zentrierorgan und dem Gegenorgan bestimmt, wodurch aufwendige Einstellarbeiten entfallen.

Vorzugsweise sind das Zentrierorgan und das Gegenorgan dergestalt ausgebildet, dass beim Verbinden oder Zusammenführen des ersten und des zweiten Führungsschienenabschnitts Fluchtungsfehler zwischen den Führungsschienenabschnitten durch lineare elastische Verlagerung des der Trennstelle zugewandten Endes des ersten und/oder zweiten Führungsschienenabschnitts in Richtungen senkrecht zur Verschieberichtung des öffnungsfähigen Dachteils ausgleichbar sind.

Das Zentrierorgan und das Gegenorgan sind weiterhin zweckmäßigerweise dergestalt ausgebildet, dass beim Verbinden oder Zusammenführen des ersten und des zweiten Führungsschienenabschnitts Fluchtungsfehler zwischen den Führungsschienenabschnitten durch elastische Verkippung des der Trennstelle zugewandten Endes des ersten und/oder des zweiten Führungsschienenabschnitts um eine im Wesentlichen in Verschieberichtung des öffnungsfähigen Dachteils verlaufende Achse ausgleichbar sind.

Die nachgiebige Lagerung kann so ausgestaltet sein, dass die Nachgiebigkeit im Bereich der Trennstelle am größten ist und mit zunehmendem Abstand von der Trennstelle abnimmt, wobei der erste und/oder der zweite Führungsschienenabschnitt im Bereich seines der Trennstelle abgewandten Endes starr mit dem Dachteil verbunden sein kann. Insbesondere ist der erste und/oder zweite Führungsschienenabschnitt über etwa 20% bis 40% seiner Gesamtlänge, ausgehend von seinem der Trennstelle abgewandten Ende, starr mit dem Dachteil, beispielsweise über mechanische Verbindungsglieder wie etwa Niete oder Schrauben, verbunden. Vorzugsweise ist etwa ein Drittel des Führungsschienenabschnitts starr mit dem Dachteil verbunden.

In weiterer Ausgestaltung der Erfindung ist der Bereich des ersten und/oder des zweiten Führungsschienenabschnitts, der sich zwischen der Trennstelle und dem starr mit dem Dachteil verbundenen Bereich des Führungsschienenabschnitts erstreckt, frei im oder am Dachteil geführt. Auf diese Weise kann die Biegeelastizität des Führungsschienenabschnitts selbst ausgenutzt werden, um die Nachgiebigkeit der beiden Führungsschienenabschnitte mit Bezug aufeinander im Bereich der Trennstelle zu erzielen.

Werden der erste und/oder der zweite Führungsschienenabschnitt im Bereich der Trennstelle über ein gummielastisches Zwischenglied am Dachteil gelagert, können Klappergeräusche vermieden und eine wirksame Schwingungsdämpfung erreicht werden. Ferner ist es möglich, auch den gesamten Führungsschienenabschnitt nachgiebig oder schwimmend zu lagern, beispielsweise indem er ausschließlich über gummielastische Zwischenglieder mit dem Dachteil verbunden wird und auf eine starre Anbindung seines der Trennstelle abgewandten Endes an das Dachteil verzichtet wird.

Das Zentrierorgan kann einen Zentrierzapfen und das Gegenorgan ein Zentrierlager umfassen, wobei der Zentrierzapfen in das Zentrierlager einführbar ist, und zwar vorzugsweise im Wesentlichen senkrecht mit Bezug auf eine die Trennstelle umfassende Ebene.

Das Zentrierlager kann so ausgebildet sein, dass es einen vorteilhafterweise der Trennstelle zugewandten Einführabschnitt und einen Zentrierabschnitt umfasst, wobei der Einführabschnitt sich zum Zentrierabschnitt hin verjüngt und der Zentrierzapfen spielfrei im Zentrierabschnitt aufgenommen ist.

Die Fluchtungstoleranzen bei zusammengeführten Führungsschienenabschnitten lassen sich reduzieren, wenn der Zentrierzapfen mit dem Zentrierabschnitt des Zentrierlagers in Linienkontakt bringbar ist.

Weist der Zentrierzapfen wenigstens im Bereich seiner spielfreien Aufnahme im Zentrierabschnitt einen nicht-runden Querschnitt auf, wird verhindert, dass sich der Zentrierzapfen im Zentrierlager verdrehen kann. Dies gewährleistet nicht nur eine Zentrierung oder Ausrichtung der beiden Führungsschienenabschnitte in Richtungen im Wesentlichen senkrecht zur Richtung der Einführung des Zentrierzapfens in das Zentrierlager, sondern auch eine Vermeidung einer Verkippung der beiden Abschnitte im um eine in Einführungsrichtung verlaufende Achse. Dabei weist der Zentrierzapfen im Bereich seiner spielfreien Aufnahme im Zentrierabschnitt vorzugsweise einen im Wesentlichen rechteckigen Querschnitt auf.

Die Einführung des Zentrierzapfens in das Zentrierlager sowie seine definierte Anlage im Zentrierabschnitt lassen sich dadurch verbessern, dass der Zentrierzapfen ausgehend von seinem Bereich der spielfreien Aufnahme im Zentrierabschnitt im Wesentlichen in und gegen seine Einführrichtung in das Zentrierlager verlängert ist und sich in beide Richtungen verjüngt.

Das Zentrierlager lässt sich auch bei komplexer Geometrie auf einfache und kostengünstige Weise herstellen, wenn es als Kunststoffteil ausgebildet und am zweiten Führungsschienenabschnitt im Bereich der Trennstelle angespritzt ist.

In weiterer Ausgestaltung der Erfindung kann das Zentrierorgan wenigstens einen zweiten Zentrierzapfen und das Gegenorgan wenigstens ein zweites Zentrierlager umfassen, wobei der zweite Zentrierzapfen in das zweite Zentrierlager einführbar ist. Durch das Vorsehen von je zwei Zentrierzapfen und Zentrierlagern, die prinzipiell gleich ausgestaltet sein können, werden insbesondere Fluchtungsfehler infolge Verkippung oder Verdrehung der beiden Führungsschienenabschnitte um eine in Verschieberichtung des öffnfungsfähigen Dachteils gelegene Achse reduziert.

Zweckmäßigerweise sind der zweite Zentrierzapfen und das zweite Zentrierlager weniger komplex ausgebildet als der erste Zentrierzapfen und das erste Zentrierlager. Insbesondere kann der zweite Zentrierzapfen als Zentrierleiste ausgebildet sein, die im ersten Führungsschienenabschnitt festgelegt ist und die Trennstelle überragt, wobei sie in das zweite Zentrierlager einführbar ist, welches am zweiten Führungsschienenabschnitt vorzugsweise einstückig angeformt ist. Dabei ist der erste und/oder der zweite Führungsschienenabschnitt vorzugsweise als metallisches Strangpressteil ausgebildet.

Der erste und der zweite Führungsschienenabschnitt können prinzipiell an der Trennstelle vollständig voneinander trennbar sein. Alternativ oder in Kombination hierzu können die Führungsschienenabschnitte an der Trennstelle mit Bezug zueinander verschwenkbar sein, beispielsweise ähnlich der aus der DE 42 03 229 A1 bekannten Art.

Der erste oder zweite Führungsschienenabschnitt kann insbesondere an einem lösbar mit dem Fahrzeug verbundenen Dachteil angeordnet sein, welches das öffnungsfähige Dachteil in dessen Öffnungsstellung lagert.

Ferner kann der erste oder zweite Führungsschienenabschnitt an Seitenholmen angeordnet sein, die sich in Verschieberichtung des öffnungsfähigen Dachteils erstrecken, wobei die Seitenholme auch lösbar mit dem Fahrzeug verbunden sein können.

Nachfolgend sind vorteilhafte Ausführungsformen des Erfindungsgegenstands anhand der Zeichnungen näher erläutert.

Es zeigt:

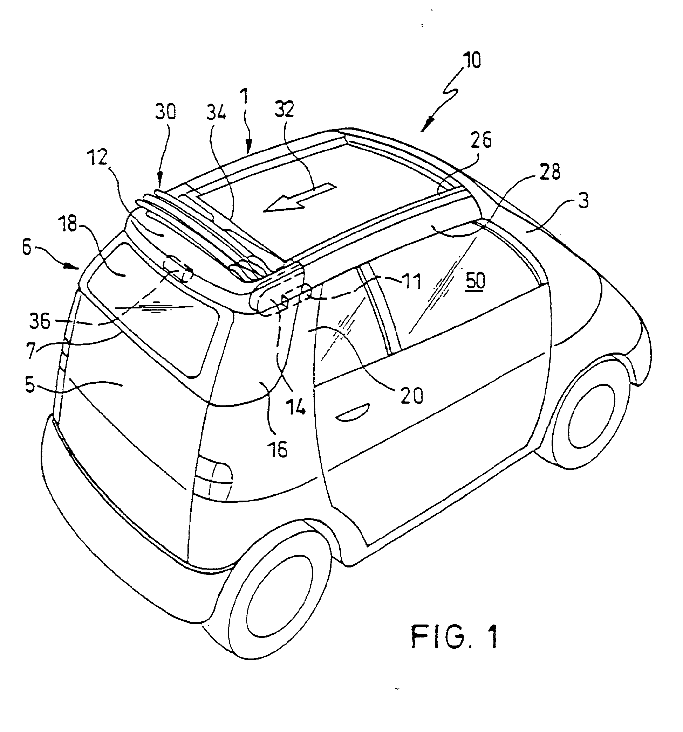

- Fig. 1: eine perspektivische Darstellung eines Fahrzeugs mit einem als Dachkassette ausgebildeten hinteren Dachteil und einem Faltdach als öffnungsfähigem Dachteil, wobei das Faltdach auf der in Fahrtrichtung gesehen linken sowie rechten Seite jeweils in zwei Führungsschienenabschnitten verschiebbar gelagert ist, von denen ein erster, hinterer Führungsschienenabschnitt in der Dachkassette und ein zweiter, vorderer Führungsschienenabschnitt in einem Seitenholm angeordnet ist, welch letzterer sich zwischen der B-Säule und einem vorderen, oberhalb der Windschutzscheibe verlaufenden Querträger erstreckt;
- Fig. 2: eine perspektivische Darstellung des Fahrzeugs der Fig. 1, wobei die Dachkassette mitsamt dem sich in Öffnungsstellung befindendem Faltdach in eine Ablageposition abgesenkt ist;
- Fig. 3: eine perspektivische Darstellung des Fahrzeugs der Fig. 1, bei dem aus Übersichtlichkeitsgründen die Dachkassette mitsamt dem Faltdach nicht dargestellt ist, wobei der Ausbau der Seitenholme veranschaulicht wird;

- Fig. 4: die schematische Draufsicht auf einen Teil der in Fahrtrichtung gesehen linken Hälfte des Fahrzeugs der Fig. 1, wobei das Faltdach nicht dargestellt ist;
- Fig. 5: den Teilschnitt entlang der Linie V-V der Fig. 4 durch einen vorderen Bereich des Seitenholms;
- Fig. 6: den Teilschnitt entlang der Linie VI-VI der Fig. 4 durch einen hinteren Bereich des Seitenholms;
- Fig. 7: den Teilschnitt entlang der Linie VII-VII der Fig. 4 durch eine Trennstelle zwischen den zwei Führungsschienenabschnitten;
- Fig. 8: die vergrößerte Detailansicht des in Fig. 7 mit einem Kreis VIII angedeuteten Bereichs;
- Fig. 9: eine Explosionsdarstellung des in der Dachkassette aufgenommenen hinteren Führungsschienenabschnitts sowie eines daran angeordneten Zentrierorgans; und
- Fig. 10: eine perspektivische Darstellung einer Verschlussvorrichtung, mittels der die Dachkassette an einem an einer B-Säule des Fahrzeugs befestigten Gegenlager festlegbar ist, wobei der hintere Führungsschienenabschnitt an der Verschlussvorrichtung festgelegt ist.

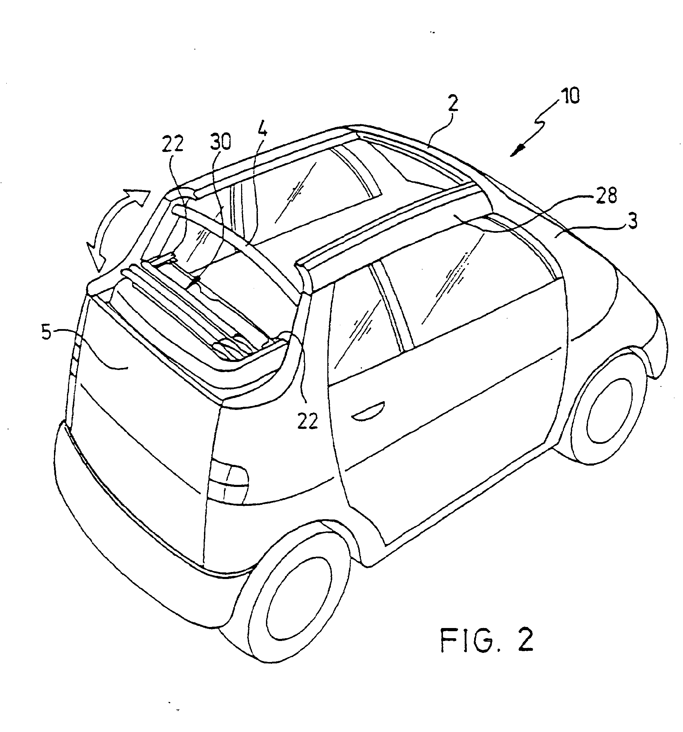

In den Fign. 1 bis 3 ist ein Fahrzeug 10 mit einem Fahrzeugdach 1 gezeigt, wobei das Fahrzeugdach 1 ein von einem Antriebsmotor 36 betätigbares Faltdach 30 als öffnungsfähiges Dachteil, ein als Dachkassette 12 ausgebildetes hinteres Dachteil, ein Heckteil 6 sowie Seitenholme 28 umfasst, die sich zwischen hinteren seitlichen Säulen des Fahrzeugs 10 (B-Säulen 20) und einem vorderen, oberhalb der Windschutzscheibe verlaufenden Querträger 2 erstrecken. Das Faltdach 30 ist auf der in Fahrtrichtung gesehen linken sowie rechten Seite jeweils in zwei Führungsschienenabschnitten verschiebbar gelagert, von denen ein erster Führungsschienenabschnitt als hinterer Führungsschienenabschnitt 22 in der Dachkassette 12 und ein zweiter Führungsschienenabschnitt als vorderer Führungsschienenabschnitt 26 in dem Seitenholm 28 angeordnet ist. Mittels des Antriebsmotors 36 ist das Faltdach 30 über nicht gezeigte drucksteife Kabel in bzw. entgegen seiner Öffnungsrichtung 32 verschiebbar und kann in beliebige Zwischenstellungen zwischen seiner Öffnungsstellung (vgl. Fign. 1 und 2) und seiner Schließstellung gebracht werden. In Öffnungsstellung ist das Faltdach 30 in der Dachkassette 12 gelagert, wobei alle in den Führungsschienenabschnitten 22 und 26 verschiebbaren Teile des Faltdachs 30 in dem hinteren Führungsschienenabschnitt 22 in der Dachkassette 12 aufgenommen und mit Bezug auf die Dachkassette 12 arretierbar sind. Dabei ist das Faltdach 30 in Öffnungsstellung soweit nach hinten in Öffnungsrichtung 32 verschoben, dass seine Dachspitze 34 im wesentlichen bündig mit einer Vorderkante der Dachkassette 12 abschließt.

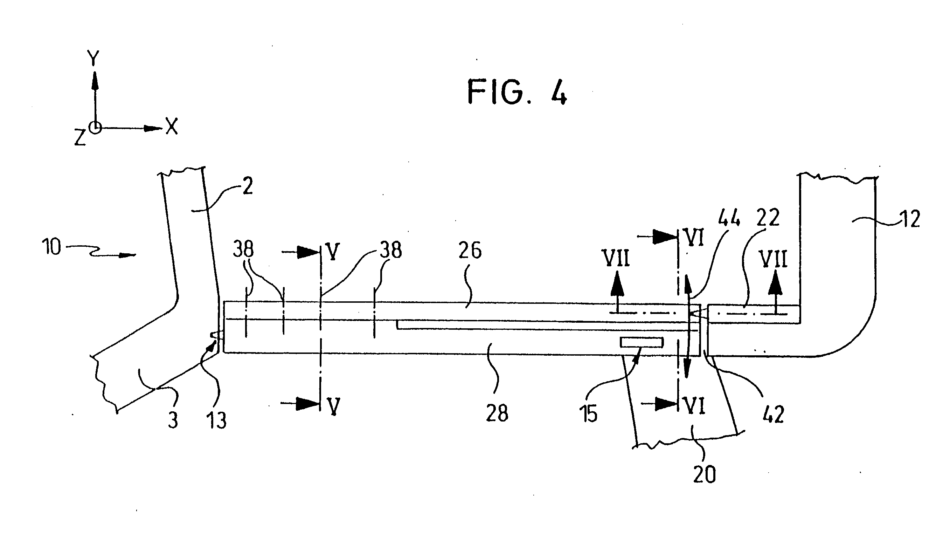

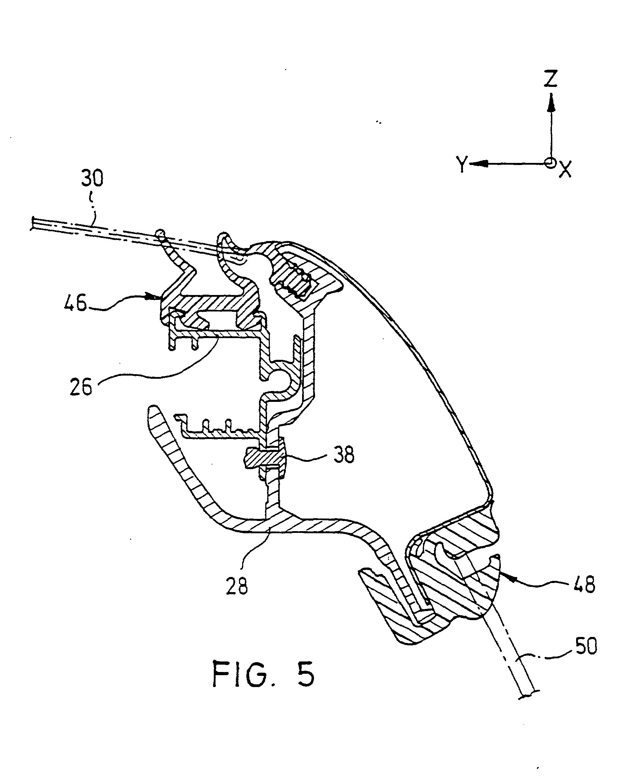

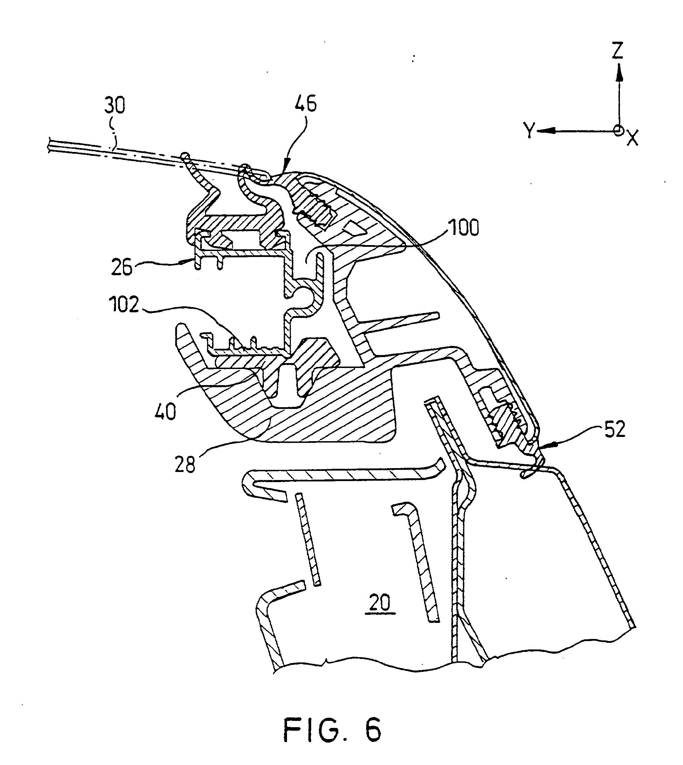

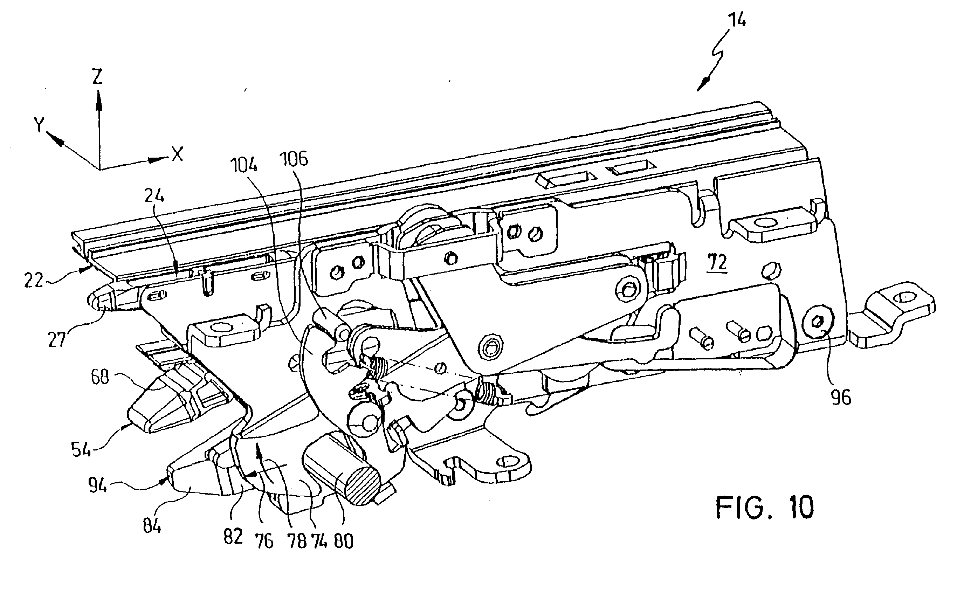

Die in der Dachkassette 12 angeordneten hinteren Führungsschienenabschnitte 22 sind an insgesamt mit 14 bezeichneten Verschlussvorrichtungen angebracht (vgl. Fig. 10), welche ihrerseits an der Dachkassette 12 festgelegt sind. Je eine Verschlussvorrichtung 14 ist symmetrisch zu einer in Fahrzeuglängsrichtung verlaufenden Symmetrieachse im Inneren der Dachkassette 12 an der in Fahrtrichtung linken und rechten Seite der Dachkassette 12 angebracht und wechselwirkt mit einem Gegenlager 11, welches nahe einem oberen Ende jeder der B-Säulen 20 festgelegt ist, um eine Verriegelung und Entriegelung der Dachkassette 12 mit Bezug auf die B-Säulen 20 zu bewirken. Dabei sind in den Fign. 5 bis 10 nur die in Fahrtrichtung gesehen linke Verschlussvorrichtung und die linken Führungsschienenabschnitte im Detail gezeigt, wobei die entsprechenden rechten Bauteile bzw. Baugruppen spiegelbildlich ausgeführt sind. Es sei ferner angemerkt, dass die in Fign. 4 bis 10 mit X bezeichnete Achse in Öffnungsrichtung des Faltdachs 30, d.h., in die gleiche Richtung wie der auf das Fahrzeugheck gerichtete Pfeil 32 in Fig. 1 weist.

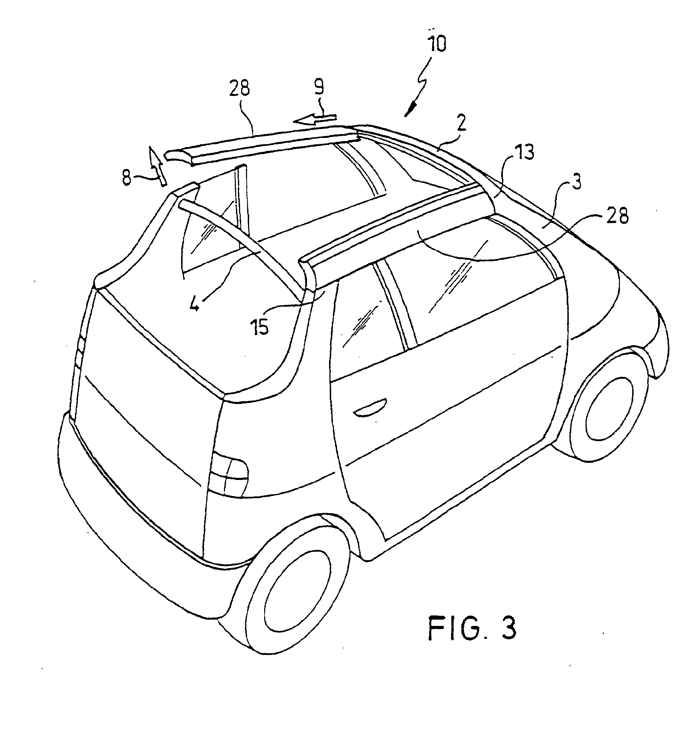

Die Seitenholme 28 sind lösbar mit dem Fahrzeug 10 verbunden, wozu im Bereich der Stoßstelle zwischen dem vorderen, oberhalb der Windschutzscheibe verlaufenden Querträger 2 und vorderen seitlichen Säulen (A-Säulen 3) vordere Seitenholmlager 13 sowie im Bereich des oberen Endes der hinteren Säulen (B-Säulen 20) hintere Seitenholmlager 15 vorgesehen sind, wie dies in den Fign. 3 und 4 veranschaulicht ist. Zum Ausbau der Seitenholme 28 werden, wie der Fig. 3 zu entnehmen ist, zunächst die hinteren Seitenholmlager 15 entriegelt, die Seitenholme 28 an ihrem hinteren Ende in Richtung des Pfeils 8 angehoben und dann in Richtung des Pfeils 9 nach hinten aus den vorderen Seitenholmlagern 13 herausgezogen. Die ausgebauten Seitenholme 28 lassen sich im Fahrzeug 10 in entsprechenden Aufnahmevorrichtungen, beispielsweise in einer Hecktür 5, ablegen. Zwischen den starr mit der Fahrzeugkarosserie verbundenen B-Säulen 20 kann sich in der Art eines Überrollbügels ein hinterer Querträger 4 erstrecken.

An der Dachkassette 12 ist ein Heckteil 6 des Fahrzeugdachs 1 festgelegt und umfasst eine Heckscheibe 18 aus faltbarem Kunststoffmaterial sowie ebenfalls faltbare Seitenteile 16. Die Dachkassette 12 ist über eine nicht gezeigte Viergelenkanordnung mit der Fahrzeugkarosserie verbunden und nach ihrer Entriegelung von dem Gegenlager 11 der B-Säulen 20 soweit absenkbar, dass eine Oberseite der Dachkassette 12 im wesentlichen auf der Höhe der Fahrzeuggürtellinie zu liegen kommt. Um die Dachkassette 12 in abgesenkter Position zu arretieren, ist an der Viergelenkanordnung selbst ebenfalls ein Gegenlager vorgesehen, mit dem die Verschlussvorrichtung 14 in ähnlicher Weise wie mit dem Gegenlager 11 wechselwirkt. Eine Unterseite 7 des Heckteils 6 ist an eine Hecktür 5 anlegbar und kann nach oben geklappt werden, um den Zugang zu einem im Fahrzeugheck gelegenen Stauraum zu verbessern. Die Hecktür 5 ihrerseits ist mit ihrer Unterseite schwenkbar mit der Fahrzeugkarosserie verbunden und kann unabhängig von der Position, welche die Unterseite 7 des Heckteils 6 einnimmt sowie auch bei abgesenkter Dachkassette 12 nach hinten geklappt werden. Zur Erhöhung der Stabilität des Heckteils und zur Anbringung einer Schlossfalle für die Hecktür 5 kann an der Unterseite 7 des Heckteils 6 ein Querträger angeordnet sein.

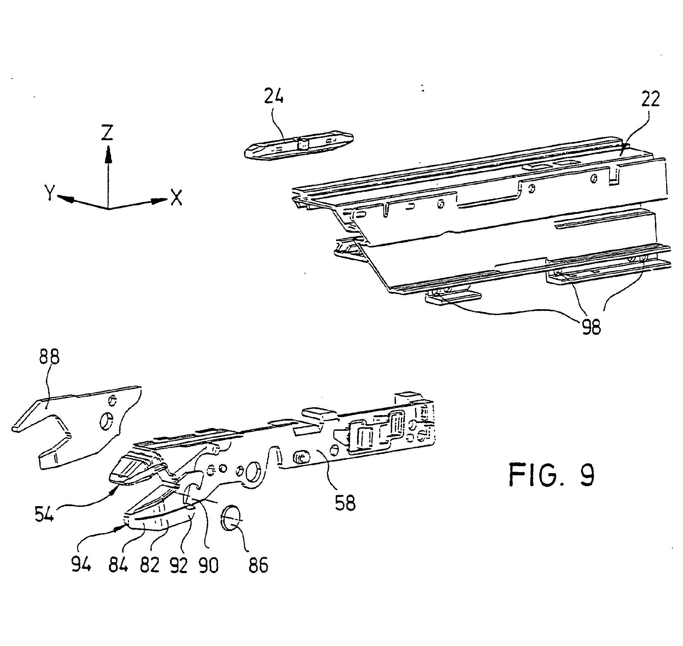

Wie den Fign. 9 und 10 zu entnehmen ist, umfasst die Verschlussvorrichtung 14 eine Lagerplatte 72, einen relativ zu der Lagerplatte 72 in und entgegegen der Richtung des Pfeils 76 verschiebbaren sowie in und entgegen der Richtung des Pfeils 78 schwenkbaren Verriegelungshaken 74, dessen Bewegung vorzugsweise mittels motorischer Betätigung durch den Antriebsmotor 36 erfolgt. Der Verriegelungshaken 74 wirkt mit einem Bolzen 80 zusammen, der Teil des Gegenlagers 11 ist und kann von einer in Fig. 10 gezeigten hinteren Rastpositon in Richtung des Pfeils 76 nach vorne in eine vordere Rastposition verschoben werden, wobei der Bolzen 80 vom Verriegelungshaken 74 in beiden Positionen in einer in -X-Richtung offenen, in der Lagerplatte 72 ausgebildeten U-förmigen Aufnahmenut arretiert ist. Ausgehend von der vorderen Rastposition des Verriegelungshakens 74 kann dieser in Richtung des Pfeils 78 von seiner in Fig. 10 wiedergegebenen abgesenkten Verriegelungsstellung in eine Freigabestellung angehoben werden, um den Bolzen 80 freizugeben, so dass dieser nach vorne in X-Richtung aus der Aufnahmenut herausgleiten kann, die Dachkassette 12 von den Gegenlagern 11 der B-Säulen 20 entriegelt ist und abgesenkt werden kann. In der Freigabestellung wird der Verriegelungshaken 74 über einen Haltehebel 104, der mit einem Haltebolzen 106 zusammenwirkt, gehalten.

Die Ankopplung der Dachkassette 12 an die Gegenlager 11 der B-Säulen 20 verläuft in sinngemäß umgekehrter Reihenfolge, wobei der Bolzen 80 in die in der Lagerplatte 72 ausgebildete Aufnahmenut eingeführt wird und den Haltehebel 104 betätigt, so dass dieser von dem Haltebolzen 106 freikommt und der Verriegelungshaken 74 über eine Federvorspannung entgegen der Richtung des Pfeils 78 nach unten in seine Verriegelungssttellung zurückkehrt. Beim Verschieben des Verriegelungshakens 74 von seiner vorderen in seine hintere Rastposition wird die Dachkassette 12 an die Gegenlager 11 herangezogen und die hinteren und vorderen Führungsschienenabschnitte 22 bzw. 26 stoßen im Bereich ihrer Trennstelle 42 stirnseitig aneinander oder nehmen einen definierten geringen Abstand zueinander ein.

Zur Zentrierung bzw. Ausrichtung des hinteren und des vorderen Führungsschienenabschnitts 22 bzw. 26 in zusammengeführtem Zustand ist an dem hinteren Führungsschienenabschnitt 22 ein Zentrierorgan angeordnet, welches eine Zentrierleiste 24 und einen Zentrierzapfen 54 umfasst und mit einem komplementären Gegenorgan an dem vorderen Führungsschienenabschnitt 26 wechselwirkt. Dabei überragt eine Spitze 27 der Zentrierleiste 24 die Trennstelle 42 zwischen den beiden Führungsschienenabschnitten 22 und 26 und greift in eine komplementär geformte Aufnahme 100 ein, die am vorderen Führungsschienenabschnitt 26 einstückig angefromt ist, der vorzugsweise als metallisches Strangpressteil ausgebildet ist.

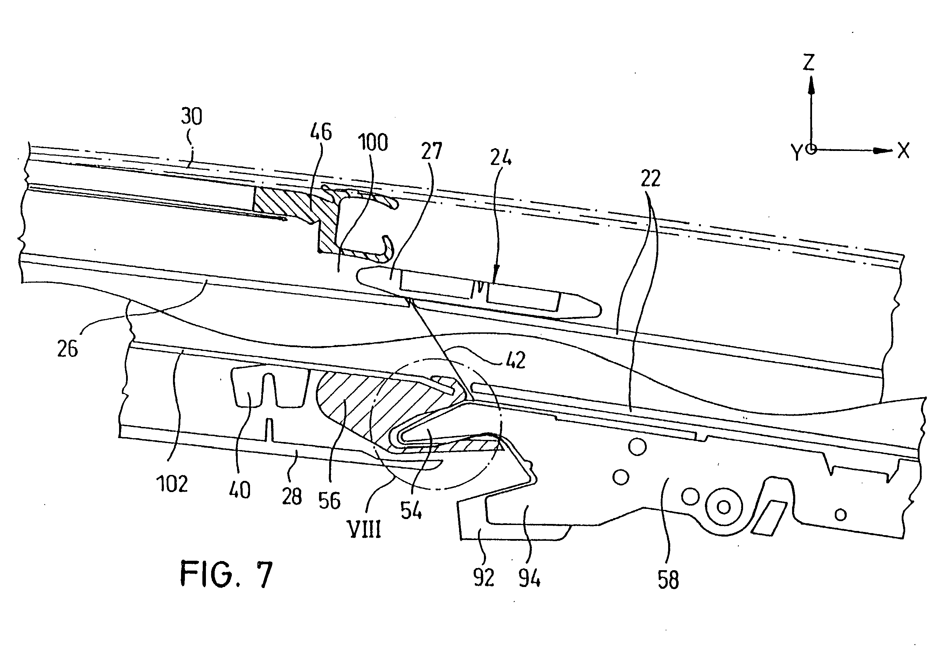

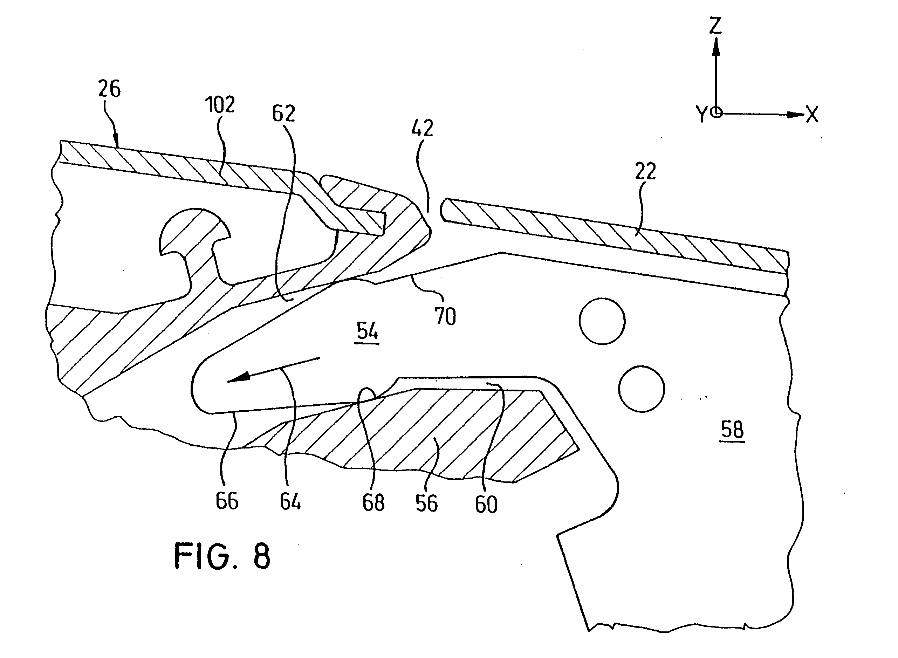

Die als Kunststoffformteil ausgeführte Zentrierleiste 24 ist in eine Nut im oberen Abschnitt des hinteren Führungsschienenabschnitts 22 eingesetzt und vorzugsweise formschlüssig mit diesem verbunden. Der Zentrierzapfen 54 überragt ebenfalls die Trennstelle 42 und greift in ein an einer unteren Wand 102 des vorderen Führungsschienenabschnitts 26 angespritztes Zentrierlager 56 aus Kunststoff ein (siehe Fign. 7 und 8).

Der Zentrierzapfen 54 ist an einer mittels eines Verstärkungsblechs 88 verstärkten

Basisplatte 58 angeordnet, die an dem hinteren Führungsschienenabschnitt 22 festgelegt ist, indem mehrere Schrauben 96 die Lagerplatte 72, in einem unteren Bereich an dem hinteren Führungsschienenabschnitt 22 vorgesehene Durchbrüche 98 sowie die Basisplatte 58 durchsetzen und die genannten Bauteile miteinander verbinden, wobei weitere Verbindungs- und bei Bedarf auch Ausrichtelemente vorgesehen sein können, um eine definierte Position der Bauteile mit Bezug aufeinander zu gewährleisten.

Die Basisplatte 58 und das Verstärkungsblech 88 sind in Metall ausgeführt und an ihrem die Trennstelle 42 überragenden Ende in Form eines in X-Richtung offenen U ausgebildet, von dem ein oberer und ein unterer Schenkel einen metallischen Kern für den Zentrierzapfen 54 bzw. für eine Zentrierplatte 94 bilden, wobei die Aussenkontur des Zentrierzapfens 54 und der Zentrierplatte 94 durch eine Umspritzung 92 aus Kunststoff gebildet wird. Die Zentrierplatte 94 wirkt mit einer ihr zugewandten Stirnfläche des Bolzens 80 zusammen und dient gemeinsam mit der auf der in Fahrtrichtung gesehen rechten Seite der Dachkassette 12 vorhandenen spiegelbildlichen rechten Zentrierplatte und dem spiegelbildlichen Bolzen des rechten Gegenlagers einer Zentrierung der Dachkassette 12 in +/-Y-Richtung, zu welchem Zweck die Zentrierplatte 94 eine in der X-Z-Ebene gelegene Zentrierfläche 82 aufweist.

Im Bereich der Zentrierfläche 82 ist in der Umspritzung 92 ein runde Aussparung 90 vorgesehen, in die ein Gummielement 86 eingelegt und adhäsiv verbunden ist. Das zur Geräuschreduzierung verwendete Gummielement 86 ist dergestalt in der Zentrierfläche 82 gelegen, dass die der Zentrierfläche 82 zugewandte Stirnfläche des Bolzens 80 über dem Gummielement 86 zu liegen kommt, sofern der Verriegelungshaken 74 mit dem in die Aufnahmenut der Lagerplatte 72 eingeführten Bolzen 80 seine hintere Rastposition einnimmt. Zur besseren Führung des Bolzens 80 in Y-Richtung bei dessen Einführung in die Aufnahmenut ist am vorderen Ende der Zentrierplatte 94 eine Einführschräge 84 vorgesehen, die in die Zentrierfläche 82 mündet.

Wie den Fign. 4 bis 7 zu entnehmen ist, ist der vordere Führungsschienenabschnitt 26 an seinem vorderen Drittel über mehrere Blindniete 38 im wesentlichen starr an dem Seitenholm 28 festgelegt, wohingegen in dem der Trennstelle 42 zugewandten Bereich des vorderen Führungsschienenabschnitts 26 zwischen dem vorderen Führungsschienenabschnitt 26 und dem Seitenholm 28 ein Gummipuffer 40 zwischengelegt ist, der der Geräusch- und Schwingungsdämpfung dient.

Je nach Geometrie und mechanischen Eigenschaften des Gummipuffers 40 kann die Nachgiebigkeit des der Trennstelle 42 zugewandten Endes des vorderen Führungsschienenabschnitts 26 beeinflusst werden, so dass sich beispielsweise die Nachgiebigkeit in +/-Y-Richtung, d.h., im wesentlichen in Richtung des Doppelpfeils 44, von derjenigen in +/-Z-Richtung unterscheiden kann. Vorzugsweise ist die Nachgiebigkeit des der Trennstelle 42 zugewandten Endes des vorderen Führungsschienenabschnitts 26 in Richtung des Doppelpfeils 44 größer als die Nachgiebigkeit in +/-Z-Richtung. Demgegenüber ist der hintere Führungsschienenabschnitt 22 im wesentlichen starr mit der Dachkassette 12 verbunden, so dass beispielsweise der Abstand, den der in Fahrtrichtung gesehen linke hintere Führungsschienenabschnitt 22 mit Bezug auf den rechten hinteren Führungsschienenabschnitt in Y-Richtung einnimmt im wesentlichen von der Bauteiltoleranz der Dachkassette 12 in Breitenrichtung abhängt.

Beim Zusammenführen der vorderen und hinteren Führungsschienenabschnitte 26, 22 wirkt, wie bereits erwähnt, das am hinteren Führungsschienenabschnitt 22 vorhandene Zentrierorgan mit dem am vorderen Führungsschienenabschnitt 26 vorgesehenen Gegenorgan zusammen, wobei die Nachgiebigkeit des vorderen Führungsschienenabschnitts 26 ausgenutzt wird, um den vorderen Führungsschienenabschnitt 26 im Bereich der Trennstelle 42 mit Bezug auf den hinteren Führungsschienenabschnitt 22 zu zentrieren bzw. auszurichten und die beiden Führungsschienenabschnitte in Fluchtung zu bringen, so dass in den Führungsschienenabschnitten 22 und 26 verschiebbar aufgenommene Gleiter des Faltdachs 30 ohne Schwierigkeiten über die Trennstelle 42 hinweg verschoben werden können. Dabei übernehmen der Zentrierzapfen 54 und das Zentrierlager 56 in erster Linie die Aufgabe, die beiden Führungsschienenabschnitte 22 und 26 in Y-und in Z-Richtung mit Bezug aufeinander auszurichten und Fluchtungsfehler in diesen Richtungen, d.h., im wesentlichen in Richtungen senkrecht zur Verschieberichtung des Faltdachs 30, auszugleichen.

Zu diesem Zweck umfasst das Zentrierlager 56 einen Einführabschnitt 60 und einen Zentrierabschnitt 62, wobei der Einführabschnitt 60 sich ausgehend von seinem der Trennstelle 42 zugewandten offenen Ende zum Zentrierabschnitt 62 hin verjüngt. Der Zentrierzapfen 54 ist bei zusammengeführten Führungsschienenabschnitten 22 und 26 im wesentlichen spielfrei im Zentrierabschnitt 62 des Zentrierlagers 56 aufgenommen, indem ein Zentrierabschnitt 68 des Zentrierzapfens 54 mit dem Zentrierabschnitt 62 des Zentrierlagers 56 im wesentlichen in Linienkontakt steht.

Der in Einführrichtung 64 (siehe Fig. 8) in das Zentrierlager 56 einführbare Zentrierzapfen 54 besitzt in Ebenen senkrecht zur Einführrichtung 64 einen etwa rechteckigen Querschnitt, wobei sich eine längere Seite des Rechtecks im wesentlichen in +/-Y-Richtung und eine kürzere Seite im wesentlichen in +/-Z-Richtung erstreckt. Die Einführrichtung 64 des Zentrierzapfens 54 kann in Richtung der X-Achse und somit in Verschieberichtung des Faltdachs 30 verlaufen oder, wie in der gezeigten Ausführungsform, einen vorbestimmten Winkel zur X-Achse einnehmen.

Der Zentrierabschnitt 68 stellt in Einführrichtung 64 gesehen den Bereich der größten Dicke des Zentrierzapfens 54 dar, an den sich in Einführrichtung 64 ein zur Spitze des Zentrierzapfens hin verjüngender Einführabschnitt 66 und entgegen der Einführrichtung 64 ein Freistellberich 70 anschließt. Der Freistellbereich 70 kommt bei zusammengeführten Führungsschienenabschnitten 22 und 26 im Bereich des Einführabschnitts 60 des Zentrierlagers 56 zu liegen.

Dadurch, dass der Zentrierzapfen 54 einen etwa rechteckigen Querschnitt aufweist, der spielfrei im Zentrierabschnitt 62 des Zentrierlagers 56 aufgenommen ist, tragen der Zentrierzapfen 54 und das Zentrierlager 56 auch dazu bei, dass die beiden Führungsschienenabschnitte 22 und 26 verdreh- oder verkippsicher mit Bezug auf eine im Wesentlichen in +/-X-Richtung verlaufende Drehachse ausgerichtet sind und eventuelle Fluchtungsfehler infolge Verkippung um diese Achse ausgeglichen werden.

Dabei wird die nachgiebige Lagerung des vorderen Führungsschienenabschnitts 26 im Bereich der Trennstelle 42 ausgenutzt, um diesen je nach Verkippung um die X-Achse zu verdrehen und mit Bezug auf den hinteren Führungsschienenabschnitt 22 auszurichten. Der Ausgleich von Fluchtungsfehlern zwischen dem vorderen und dem hinteren Führungsschienenabschnitt 26 bzw. 22 aufgrund von Verkippungen wird durch Verwendung eines zweiten Zentrierzapfens in Form der Zentrierleiste 24 und eines zweiten Zentrierlagers in Form der Aufnahme 100 bedeutend verbessert, wobei die beiden Zentrierzapfen bzw. Zentrierlager vorzugsweise einen möglichst großen Abstand, gemessen in der Y-Z-Ebene, einnehmen, um günstige Hebelverhältnisse für den Ausgleich von Verkippungen um die X-Achse sowie eine große Toleranzsicherheit zu gewährleisten.

Eine in den Fign. 5 bis 7 wiedergegebene Profildichtung 46 ist in entsprechende Aufnahmen an einem oberen Abschnitt des vorderen Führungsschienenabschnitts 26 und dem Seitenholm 28 eingesteckt und verhindert das Eindringen von Feuchtigkeit oder Schmutz von oben in den Bereich zwischen dem vorderen Führungsschienenabschnitt 26 und dem Seitenholm 28. Gleichzeitig dichtet die Profildichtung 46, die in unbelastetem Zustand eingezeichnet ist, das Faltdach 30 im Bereich der Seitenholme 28 zum Fahrzeuginnenraum hin ab. Am Seitenholm 28 sind ferner Profildichtungen 48 und 52 vorgesehen, die der Abdichtung des Seitenholms 28 mit Bezug auf eine Türscheibe 50 bzw. auf die B-Säule 20 dienen und ebenfalls im unbelasteten Zustand wiedergegeben sind.

### Bezugszeichenliste

- 1: Fahrzeugdach
- 2: vorderer Querträger
- 3: A-Säule
- 4: hinterer Querträger
- 5: Hecktür
- 6: Heckteil
- 7: Unterseite (von 6)
- 8,9: Pfeil
- 10: Fahrzeug
- 11: Gegenlager
- 12: Dachkassette
- 13: vorderes Seitenholmlager
- 14: Verschlussvorrichtung
- 15: hinteres Seitenholmlager
- 16: Seitenteil
- 18: Heckscheibe
- 20: B-Säule
- 22: hinterer Führungsschienenabschnitt
- 24: Zentrierleiste
- 26: vorderer Führungsschienenabschitt
- 27: Spitze (von 24)
- 28: Seitenholm
- 30: Faltdach
- 32: Öffnungsrichtung
- 34: Dachspitze
- 36: Antriebsmotor
- 38: Blindniet
- 40: Gummipuffer
- 42: Trennstelle
- 44: Pfeil
- 46, 48: Profildichtung
- 50: Türscheibe
- 52: Profildichtung
- 54: Zentrierzapfen
- 56: Zentrierlager
- 58: Basisplatte
- 60: Einführabschnitt (von 56)
- 62: Zentrierabschnitt (von 56)
- 64: Einführrichtung
- 66: Einführabschnitt (von 54)
- 68: Zentrierabschnitt (von 54)
- 70: Freistellabschnitt (von 54)
- 72: Lagerplatte
- 74: Verriegelungshaken
- 76, 78: Pfeil
- 80: Bolzen
- 82: Zentrierfläche
- 84: Einführschräge
- 86: Gummielement
- 88: Verstärkungsblech
- 90: Aussparung
- 92: Umspritzung
- 94: Zentrierplatte
- 96: Schraube
- 98: Durchbruch
- 100: Aufnahme
- 102: Wand (von 26)
- 104: Haltehebel
- 106: Haltebolzen

## Patentansprüche

1. Führungsschiene zur Aufnahme wenigstens eines verschiebbaren Dachteils (30) eines Fahrzeugs (10), wobei die Führungsschiene mindestens einen ersten und einen zweiten Führungsschienenabschnitt (22 bzw. 26) umfasst, die über eine Trennstelle (42) miteinander verbindbar und an der Trennstelle (42) in Fluchtung bringbar sind, und wobei das öffnungsfähige Dachteil (30) über die Trennstelle (42) hinweg verschiebbar ist, wobei der erste Führungsschienenabschnitt (22) ein Zentrierorgan (24 bzw. 54) umfasst oder ein solches an ihm festgelegt ist, welches mit einem komplementären Gegenorgan (100 bzw. 56) zusammenwirkt, das an dem zweiten Führungsschienenabschnitt (26) ausgebildet oder an diesem festgelegt ist, **dadurch gekennzeichnet, dass** der erste und/oder der zweite Führungsschienenabschnitt (22 bzw. 26) wenigstens im Bereich der Trennstelle (42) nachgiebig an einem Dachteil 12 bzw. 28) des Fahrzeugs (10) gelagert ist, und dass das Zentrierorgan (24 bzw. 54) und das Gegenorgan (100 bzw. 56) dergestalt ausgebildet sind, dass beim Verbinden des ersten und des zweiten Führungsschienenabschnitts (22 bzw. 26) Fluchtungsfehler zwischen den Führungsschienenabschnitten durch lineare elastische Verlagerung des der Trennstelle (42) zugewandten Endes des ersten und/oder des zweiten Führungsschienenabschnitts (22 bzw. 26) in Richtungen im Wesentlichen senkrecht zur Verschieberichtung des öffnungsfähigen Dachteils (30) ausgleichbar sind.

2. Führungsschiene nach Anspruch 1, **dadurch gekennzeichnet, dass** das Zentrierorgan und das Gegenorgan dergestalt ausgebildet sind, dass beim Verbinden des ersten und des zweiten Führungsschienenabschnitts (22 bzw. 26) Fluchtungsfehler zwischen den Führungsschienenabschnitten durch elastische Verkippung des der Trennstelle (42) zugewandten Endes des ersten und/oder des zweiten Führungsschienenabschnitts um eine im Wesentlichen in Verschieberichtung des öffnungsfähigen Dachteils (30) verlaufende Achse ausgleichbar sind.

3. Führungsschiene nach einem der vorhergehenden Ansprüche, **dadurch gekennzeichnet, dass** die nachgiebige Lagerung so ausgestaltet ist, dass die Nachgiebigkeit im Bereich der Trennstelle (42) am größten ist und mit zunehmendem Abstand von der Trennstelle (42) abnimmt.

4. Führungsschiene nach einem der vorhergehenden Ansprüche, **dadurch gekennzeichnet, dass** der erste und/oder der zweite Führungsschienenabschnitt (22 bzw. 26) im Bereich seines der Trennstelle (42) abgewandten Endes starr mit einem Dachteil (12 bzw. 28) verbunden ist.

5. Führungsschiene nach Anspruch 4, **dadurch gekennzeichnet, dass** der zweite Führungsschienenabschnitt (26) über etwa 20% bis 40% seiner Gesamtlänge ausgehend von seinem der Trennstelle (42) abgewandten Ende im Wesentlichen starr mit einem Seitenholm (28) verbunden ist.

6. Führungsschiene nach Anspruch 5, **dadurch gekennzeichnet, dass** der Bereich des zweiten Führungsschienenabschnitts (26), der sich zwischen der Trennstelle (42) und dem starr mit dem Seitenholm (28) verbundenen Bereich des Führungsschienenabschnitts erstreckt, im Wesentlichen frei im oder am Seitenholm (28) geführt ist.

7. Führungsschiene nach einem der vorhergehenden Ansprüche, **dadurch gekennzeichnet, dass** der erste und/oder der zweite Führungsschienenabschnitt (22 bzw. 26) im Bereich der Trennstelle (42) über ein gummielastisches Zwischenglied (40) am Seitenholm (28) gelagert ist.

8. Führungsschiene nach einem der vorhergehenden Ansprüche, **dadurch gekennzeichnet, dass** das Zentrierorgan einen Zentrierzapfen (54) und das Gegenorgan ein Zentrierlager (56) umfasst, wobei der Zentrierzapfen (54) in das Zentrierlager (56) einführbar ist.

9. Führungsschiene nach Anspruch 8, **dadurch gekennzeichnet, dass** der Zentrierzapfen (54) im Wesentlichen senkrecht mit Bezug auf eine die Trennstelle (42) umfassende Ebene in das Zentrierlager (56) einführbar ist.

10. Führungsschiene nach Anspruch 8 oder 9, **dadurch gekennzeichnet, dass** das Zentrierlager (56) einen Einführabschnitt (60) und einen Zentrierabschnitt (62) umfasst, wobei der Einführabschnitt (60) sich zum Zentrierabschnitt (62) hin verjüngt und der Zentrierzapfen (54) spielfrei im Zentrierabschnitt (62) aufgenommen ist.

11. Führungsschiene nach Anspruch 10, **dadurch gekennzeichnet, dass** der Zentrierzapfen (54) mit dem Zentrierabschnitt (62) des Zentrierlagers (56) in Linienkontakt bringbar ist.

12. Führungsschiene nach Anspruch 10 oder 11, **dadurch gekennzeichnet, dass** der Zentrierzapfen (54) wenigstens im Bereich seiner spielfreien Aufnahme im Zentrierabschnitt (62) einen nicht-runden Querschnitt aufweist.

13. Führungsschiene nach Anspruch 12, **dadurch gekennzeichnet, dass** der Zentrierzapfen (54) im Bereich seiner spielfreien Aufnahme im Zentrierabschnitt (62) einen im Wesentlichen rechteckigen Querschnitt aufweist.

14. Führungsschiene nach einem der Ansprüche 10 bis 13, **dadurch gekennzeichnet, dass** der Zentrierzapfen (54) ausgehend von seinem Bereich der spielfreien Aufnahme im Zentrierabschnitt (62) im Wesentlichen in und gegen seine Einführrichtung (64) in das Zentrierlager (56) verlängert ist und sich in beide Richtungen verjüngt.

15. Führungsschiene nach einem der Ansprüche 8 bis 14, **dadurch gekennzeichnet, dass** das Zentrierlager (56) als Kunststoffteil ausgebildet und am zweiten Führungsschienenabschnitt (26) im Bereich der Trennstelle (42) angespritzt ist.

16. Führungsschiene nach einem der vorhergehenden Ansprüche, **dadurch gekennzeichnet, dass** das Zentrierorgan wenigstens einen zweiten Zentrierzapfen (24) und das Gegenorgan wenigstens ein zweites Zentrierlager (100) umfasst, wobei der zweite Zentrierzapfen in das zweite Zentrierlager einführbar ist.

17. Führungsschiene nach Anspruch 16, **dadurch gekennzeichnet, dass** der zweite Zentrierzapfen als Zentrierleiste (24) ausgebildet ist, die im ersten Führungsschienenabschnitt (22) festgelegt ist und die Trennstelle (42) überragt, wobei sie in das zweite Zentrierlager (100) einführbar ist, welches am zweiten Führungsschienenabschnitt (26) angeformt ist.

18. Führungsschiene nach einem der vorhergehenden Ansprüchen, **dadurch gekennzeichnet, dass** der erste und der zweite Führungsschienenabschnitt (22 bzw. 26) an der Trennstelle (42) vollständig voneinander trennbar sind.

19. Führungsschiene nach einem der vorhergehenden Ansprüchen, **dadurch gekennzeichnet, dass** der erste und der zweite Führungsschienenabschnitt (22 bzw. 26) an der Trennstelle (42) mit Bezug zueinander verschwenkbar sind.

20. Führungsschiene nach einem der vorhergehenden Ansprüche, **dadurch gekennzeichnet, dass** der erste oder der zweite Führungsschienenabschnitt an einem lösbar mit dem Fahrzeug verbundenen Dachteil (12) angeordnet ist, welches das öffnungsfähige Dachteil (30) in dessen Öffnungsstellung lagert.

21. Führungsschiene nach einem der vorhergehenden Ansprüche, **dadurch gekennzeichnet, dass** der erste oder der zweite Führungsschienenabschnitt an Seitenholmen (28) angeordnet ist, die sich in Verschieberichtung des öffnungsfähigen Dachteils (30) erstrecken.

22. Führungsschiene nach Anspruch 21, **dadurch gekennzeichnet, dass** die Seitenholme (28) lösbar mit dem Fahrzeug (10) verbunden sind.

## Claims

1. Guide rail for accommodating at least one displaceable roof part (30) of a vehicle (10), the guide rail comprising at least a first and a second guide rail section (22 and 26), which can be joined to each other via a separating point (42) and can be brought into alignment at the separating point (42), and it being possible for the roof part (30) that can be opened to be displaced over the separating point (42), the first guide rail section (22) comprising a centring element (24 or 54) or one such being fixed to it, which interacts with a complementary mating element (100 or 56) which is formed on the second guide rail section (26) or is fixed to the latter, **characterized in that**, at least in the region of the separating point (42), the first and/or the second guide rail section (22 or 26) is fixed flexibly to a roof part (12 or 28) of the vehicle (10), and **in that** the centring element (24 or 54) and the mating element (100 or 56) are formed in such a way that, when the first and the second guide rail sections (22 and 26) are joined, alignment errors between the guide rail sections can be compensated for by means of linear elastic displacement of the end of the first and/or the second guide rail section (22 or 26) facing the separating point (42) in directions substantially at right angles to the displacement direction of the roof part (30) that can be opened.

2. Guide rail according to Claim 1, **characterized in that** the centring element and the mating element are formed in such a way that, when the first and the second guide rail sections (22 and 26) are joined, alignment errors between the guide rail sections can be compensated for by means of elastic tilting of the end of the first and/or the second guide rail section facing the separating point (42) about an axis running substantially in the displacement direction of the roof part (30) that can be opened.

3. Guide rail according to one of the preceding claims, **characterized in that** the flexible mounting is configured in such a way that the flexibility is greatest in the region of the separating point (42) and decreases with increasing distance from the separating point (42).

4. Guide rail according to one of the preceding claims, **characterized in that**, in the region of its end facing away from the separating point (42), the first and/or the second guide rail section (22 or 26) is rigidly joined to a roof part (12 or 28).

5. Guide rail according to Claim 4, **characterized in that** the second guide rail section (26) is joined substantially rigidly to a side member (28) over about 20% to 40% of its total length, starting from its end facing away from the separating point (42).

6. Guide rail according to Claim 5, **characterized in that** the region of the second guide rail section (26) which extends between the separating point (42) and the region of the guide rail section joined rigidly to the side member (28) is guided substantially freely in or on the side member (28).

7. Guide rail according to one of the preceding claims, **characterized in that**, in the region of the separating point (42), the first and/or second guide rail section (22 or 26) is mounted on the side member (28) via a resilient intermediate element (40).

8. Guide rail according to one of the preceding claims, **characterized in that** the centring element comprises a centring pin (54), and the mating element comprises a centring bearing (56), it being possible for the centring pin (54) to be inserted into the centring bearing (56).

9. Guide rail according to Claim 8, **characterized in that** the centring pin (54) can be inserted into the centring bearing (56) substantially perpendicularly in relation to a plane covering the separating point (42).

10. Guide rail according to Claim 8 or 9, **characterized in that** the centring bearing (56) comprises an insertion section (60) and a centring section (62), the insertion section (60) tapering towards the centring section (62) and the centring pin (54) being accommodated without play in the centring section (62).

11. Guide rail according to Claim 10, **characterized in that** the centring pin (54) can be brought into linear contact with the centring section (62) of the centring bearing (56).

12. Guide rail according to Claim 10 or 11, **characterized in that**, at least in the region in which it is accommodated without play in the centring section (62), the centring pin (54) has a non-round cross section.

13. Guide rail according to Claim 12, **characterized in that**, in the region in which it is accommodated without play in the centring section (62), the centring pin (54) has a substantially rectangular cross section.

14. Guide rail according to one of Claims 10 to 13, **characterized in that**, starting from its region in which it is accommodated without play in the centring section (62), the centring pin (54) is extended into the centring bearing (56) substantially in and counter to its insertion direction (64), and tapers in both directions.

15. Guide rail according to one of Claims 8 to 14, **characterized in that** the centring bearing (56) is formed as a plastic part and is injection moulded on the second guide rail section (26) in the region of the separating point (42).

16. Guide rail according to one of the preceding claims, **characterized in that** the centring element comprises at least one second centring pin (24), and the mating element comprises at least one second centring bearing (100), it being possible for the second centring pin to be inserted into the second centring bearing.

17. Guide rail according to Claim 16, **characterized in that** the second centring pin is formed as a centring strip (24), which is fixed in the first guide rail section (22) and projects beyond the separating point (42), it being possible for it to be inserted into the second centring bearing (100), which is integrally moulded on the second guide rail section (26).

18. Guide rail according to one of the preceding claims, **characterized in that** the first and the second guide rail section (22 and 26) can be separated completely from each other at the separating point (42).

19. Guide rail according to one of the preceding claims, **characterized in that** the first and the second guide rail section (22 and 26) can be pivoted in relation to each other at the separating point (42).

20. Guide rail according to one of the preceding claims, **characterized in that** the first or the second guide rail section is arranged on a roof part (12) which is detachably joined to the vehicle and which supports the roof part (30) that can be opened when the latter is in its open position.

21. Guide rail according to one of the preceding claims, **characterized in that** the first or the second guide rail section is arranged on side members (28) which extend in the displacement direction of the roof part (30) that can be opened.

22. Guide rail according to Claim 21, **characterized in that** the side members (26) are detachably joined to the vehicle (10).

## Revendications

1. Glissière de guidage destinée à recevoir au moins une partie de toit coulissante (30) d'un véhicule (10), la glissière de guidage comprenant au moins un premier et un second segment de glissière de guidage (respectivement 22 et 26) pouvant être reliés entre eux par une séparation (42) et alignés l'un avec l'autre au niveau de ladite séparation (42), et la partie de toit ouvrable (30) pouvant coulisser au-delà de la séparation (42), le premier segment de glissière de guidage (22) comportant un organe de centrage (24 ou 54) ou un tel organe de centrage y étant fixé, qui coopère avec un organe complémentaire (100 ou 56) qui est réalisé sur le second segment de glissière de guidage (26) ou qui y est fixé, **caractérisée en ce que** le premier et/ou le second segment de glissière de guidage (respectivement 22 et 26) est monté souplement sur une partie de toit (respectivement 12 et 28) du véhicule au moins dans la zone de la séparation (42), et **en ce que** l'organe de centrage (24 ou 54) et l'organe complémentaire (100 ou 56) sont réalisés de telle sorte qu'en assemblant le premier et le second segment de glissière de guidage (respectivement 22 et 26), il est possible de compenser des défauts d'alignement entre les segments de glissière de guidage en déplaçant de façon linéaire et élastique l'extrémité du premier et/ou du second segment de glissière de guidage (respectivement 22 et 26) qui est proche de la séparation (42) dans des directions essentiellement perpendiculaires à la direction de déplacement de la partie de toit ouvrable (30).

2. Glissière de guidage selon la revendication 1 , **caractérisée en ce que** l'organe de centrage et l'organe complémentaire sont conçus de telle manière qu'en assemblant le premier et le second segment de glissière de guidage (respectivement 22 et 26), il est possible de compenser des défauts d'alignement entre les segments de glissière de guidage en faisant basculer de façon élastique l'extrémité du premier et/ou du second segment de glissière de guidage qui est proche de la séparation (42) autour d'un axe s'étendant essentiellement dans la direction de déplacement de la partie de toit ouvrable (30).

3. Glissière de guidage selon l'une des revendications précédentes, **caractérisée en ce que** le montage souple est conçu de telle manière que la souplesse est maximale dans la zone de la séparation (42) et diminue au fur et à mesure que l'on s'éloigne de la séparation (42).

4. Glissière de guidage selon l'une des revendications précédentes, **caractérisée en ce que** le premier et/ou le second segment de glissière de guidage (respectivement 22 et 26) est relié fixement à une partie de toit (respectivement 12 et 28) dans la zone de son extrémité opposée à la séparation (42).

5. Glissière de guidage selon la revendication 4, **caractérisée en ce que** le second segment de glissière de guidage (26) est relié essentiellement fixement à un montant latéral (28) sur environ 20% à 40% de sa longueur totale à partir de son extrémité opposée à la séparation (42).

6. Glissière de guidage selon la revendication 5, **caractérisée en ce que** la zone du second segment de glissière de guidage (26) qui s'étend entre la séparation (42) et la zone du segment de glissière de guidage qui est reliée fixement au montant latéral (28) est guidée essentiellement librement dans ou sur le montant latéral (28).

7. Glissière de guidage selon l'une des revendications précédentes, **caractérisée en ce que**, dans la zone de séparation (42), le premier et/ou le second segment de glissière de guidage (respectivement 22 et 26) est fixé au montant latéral (28) par le biais d'un organe intermédiaire caoutchouteux (40).

8. Glissière de guidage selon l'une des revendications précédentes, **caractérisée en ce que** l'organe de centrage comprend un tourillon de centrage (54) et l'organe complémentaire, un palier à joues (56), le tourillon de centrage (54) pouvant être introduit dans le palier à joues (56).

9. Glissière de guidage selon la revendication 8, **caractérisée en ce que** le tourillon de centrage (54) peut être introduit dans le palier à joues (56) essentiellement perpendiculairement à un plan incluant la séparation (42).

10. Glissière de guidage selon la revendication 8 ou 9, **caractérisée en ce que** le palier à joues (56) comprend un segment d'introduction (60) et un segment de centrage (62), le segment d'introduction (60) se rétrécissant en direction du segment de centrage (62) et le tourillon de centrage (54) étant logé sans jeu dans le segment de centrage (62).

11. Glissière de guidage selon la revendication 10, **caractérisée en ce que** le tourillon de centrage (54) peut être mis en contact linéaire avec le segment de centrage (62) du palier à joues (56).

12. Glissière de guidage selon la revendication 10 ou 11, **caractérisée en ce que** le tourillon de centrage (54) présente, au moins dans la zone où il est logé sans jeu dans le segment de centrage (62), une section transversale essentiellement non ronde.

13. Glissière de guidage selon la revendication 12, **caractérisée en ce que** le tourillon de centrage (54) présente, au moins dans la zone où il est logé sans jeu dans le segment de centrage (62), une section transversale essentiellement rectangulaire.

14. Glissière de guidage selon l'une des revendications 10 à 13, **caractérisée en ce qu'**à partir de la zone où il est logé sans jeu dans le segment de centrage (62), le tourillon de centrage (54) se prolonge essentiellement dans le sens (44) dans lequel il est introduit dans le palier à joues (56) et dans le sens opposé, et se rétrécit dans les deux sens.

15. Glissière de guidage selon l'une des revendications 8 à 14, **caractérisée en ce que** le palier à joues (56) est réalisé sous forme de pièce en matière plastique et est moulé par injection sur le second segment de glissière de guidage (26), dans la zone de la séparation (42).

16. Glissière de guidage selon l'une des revendications précédentes, **caractérisée en ce que** l'organe de centrage comprend au moins un second tourillon de centrage (24) et l'organe complémentaire comprend au moins un second palier à joues (100), le second tourillon de centrage pouvant être introduit dans le second palier à joues.

17. Glissière de guidage selon la revendication 16, **caractérisée en ce que** le second tourillon de centrage est réalisé en tant que baguette de centrage (24) qui est fixée dans le premier segment de glissière de guidage (22) et s'étend au-delà la séparation (42), sachant qu'elle peut être introduite dans le second palier à joues (100) qui est ménagé sur le second segment de glissière de guidage (26).

18. Glissière de guidage selon l'une des revendications précédentes, **caractérisée en ce que** le premier et le second segment de glissière de guidage (respectivement 22 et 26) peuvent être entièrement séparés l'un de l'autre au niveau de la séparation (42).

19. Glissière de guidage selon l'une des revendications précédentes, **caractérisée en ce que** le premier et le second segment de glissière de guidage (respectivement 22 et 26) peuvent pivoter l'un par rapport à l'autre au niveau de la séparation (42).

20. Glissière de guidage selon l'une des revendications précédentes, **caractérisée en ce que** le premier ou le second segment de glissière de guidage est situé sur une partie de toit (12) reliée de façon amovible au véhicule, qui abrite la partie de toit ouvrable (30) lorsque celle-ci est en position ouverte.

21. Glissière de guidage selon l'une des revendications précédentes, **caractérisée en ce que** le premier ou le second segment de glissière de guidage est disposé sur des montants latéraux (28) qui s'étendent dans la direction de déplacement de la partie de toit ouvrable (30).

22. Glissière de guidage selon la revendication 21, **caractérisée en ce que** les montants latéraux (28) sont reliés de façon amovible au véhicule (10).
